# EUROPEAN PATENT SPECIFICATION

(11) **EP 0 518 679 B1**
(45) Date of publication and mention of the grant of the patent: **28.08.1996**
(21) Application number: 92305402.7
(22) Date of filing: 12.06.1992
(51) Int. Cl.: F16L 37/08, B29C 45/44

(54) **Improvements in or relating to tube coupling bodies**
Rohrkupplungs-Gehäuse
Boîte pour raccord de tuyaux

(30) Priority: 12.06.1991 GB 9112617
(43) Date of publication of application: 16.12.1992
(73) Proprietor: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(56) References cited:
- DE-A- 2 943 717
- DE-A- 3 105 917
- GB-A- 2 120 339
- GB-A- 2 145 364
- GB-A- 2 191 899
- US-A- 4 113 829
- US-A- 4 657 286

## Description

This invention relates to methods of making tube coupling bodies.

DE-A-3105917 (and US-A-4266814) discloses a tubular connector having a central bore to receive an end of plastic tube, the bore having an encircling annular bead which is adapted to form a fluid tight seal with the outer wall of the tube. To lock the tubing in place in the connection, a moulded hollow tubular body is provided formed with a "beam" section part way along its length with a plurality of comparatively short compression barbs and a plurality of comparatively longer locking barbs around its periphery to engage in the wall of the tube. The tubular body has a pair of resilient matching arms extending from its outer end having detents which match into a groove encircling the open end of the tubular connector.

GB-A-2191899 discloses a rigid electrical connector housing has an opening surrounded by a collar to which is bonded a flexible elastomeric sealing grommet projecting away from the housing and terminating in a constricted wire gripping portion having a stepped, external wire gripping surface. The grommet is collapsed inwardly of the collar into an inverted position in which the wire gripping surface becomes an internal surface of the grommet, for gripping a wire inserted through the grommet. After injection moulding of the connector housing, a mould part is withdrawn slightly from its body moulding position to uncover an injection path for forming the grommet between mould parts. Mould part is eventually withdrawn by pulling it through the grommet, with the resilience of the grommet allowing such withdrawal.

This invention provides a method in which a tube coupling body is made, said body having a throughway open at one end to receive a tube, the throughway having a first cylindrical portion of equivalent internal diameter to the external diameter of the tube to be received with a close fit, followed towards the open end by an enlarged diameter cylindrical portion to provide a cavity to receive a device for locking in the body the tube to be received, from which enlarged diameter portion a tapered portion leads to the open end of the body, the body having a cylindrical outer surface around the tapered portion so that the wall thickness of the body increases to said open end, the method comprising injection moulding the coupling body in one piece in an elastomeric material, using tooling forming the throughway of the coupling body releasing the body from the tooling by drawing the tooling through the tapered portion of the throughway out of said open end of the coupling body by stretching the wall of the coupling body as the tooling is withdrawn and after extraction of the tooling allowing the coupling body to return to its moulded shape through the elasticity of the material from which is formed the coupling body and to cool to its normal operating temperature.

The present invention, therefore, is an improvement of the method known for example from US-A-4 722 560.

The following is a description of a specific embodiment of the invention, reference being made to the accompanying drawings, in which:
Figure 1 is a sectional view through a tube coupling body and collet for locking a tube in the body;
Figure 2 is a similar view to Figure 1 showing a tube locked in place by the collet;
Figure 3 is a similar view to that of Figure 1 showing a modified arrangement of the coupling body;
Figure 4 is a similar view to Figure 3 with a tube in place;
Figure 5 shows a further modification to the coupling body of Figure 1;
Figure 6 is a similar view to that of Figure 5 with a tube in place;
Figures 7 and 8 show further forms of coupling bodies; and
Figures 9 to 15 show further modifications to the coupling bodies of Figures 1 to 7 respectively.

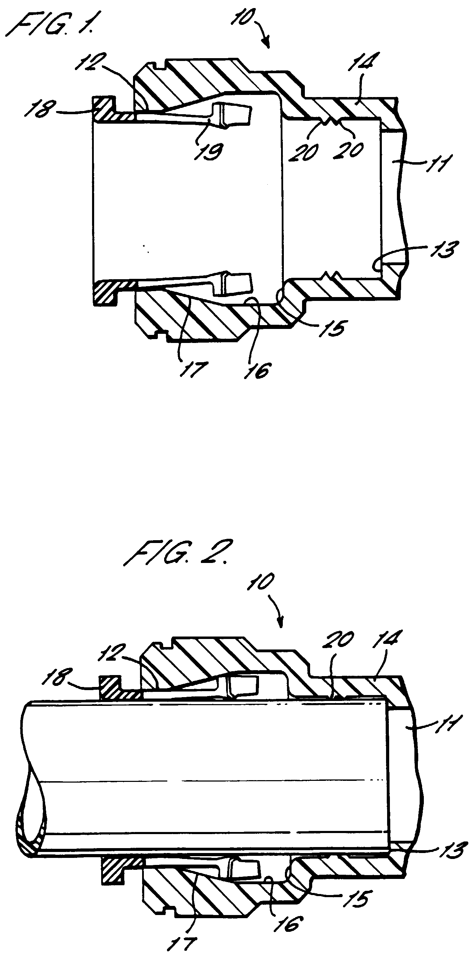

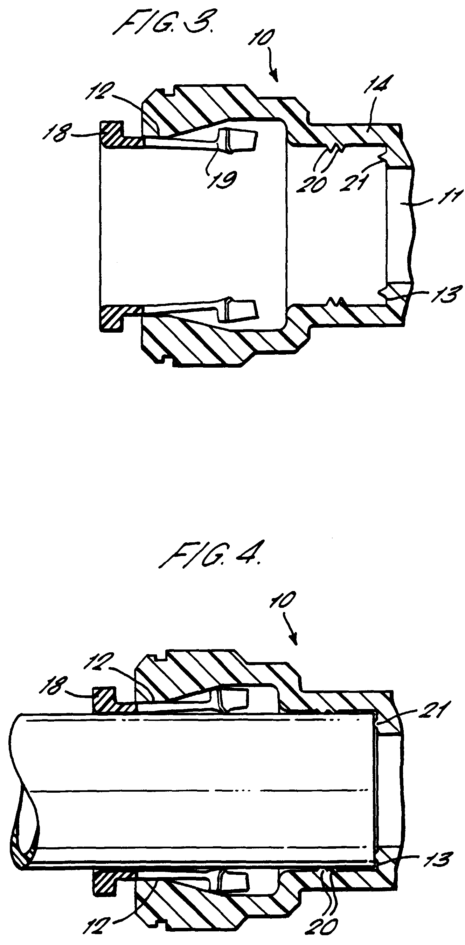

Referring firstly to Figures 1 and 2 of the drawings, there is shown a tube coupling body indicated generally at 10, formed with a throughway 11 having an open end 12.

The throughway 11 is enlarged in diameter by a step 13 facing towards the open end 12 of the coupling body to provide an enlarged diameter portion 14 the internal diameter of which is intended to provide a close fit with the external diameter of a tube to be located in the coupling body as described below. The enlarged diameter portion 14 of the throughway terminates in a further step 15 facing towards the open end of the throughway leading to a further enlarged portion of the throughway 16 from which a tapered surface 17 leads reducing in diameter to the open end of the throughway. The further enlarged portion of the throughway provides a cavity to receive a multi-fingered collet 18 projecting into the throughway from the open end 12 thereof to receive and grip the tube to be locked in the coupling body by interaction between the collet fingers 19, the tapered cam surface 17 of the throughway and the external surface of the tube.

The coupling body is an injection moulded rubber or rubber like material such as a material manufactured by Dupont under the tradename HYTREL which is a polyester elastomer. Polyurethanes can also be used as can other equivalent materials. The material has sufficient elasticity to allow certain strain without permanent deformation.

The enlarged portion 14 of the throughway is formed with a pair of integrally moulded inverted V-section sealing rings 20 located side by side one another midway along the portion 14 of the throughway to engage and seal with the external surface of a tube inserted in the coupling body. The tube engages the step or shoulder 13 and is held in the coupling body by the collet 18 as illustrated in Figure 2 of the drawings.

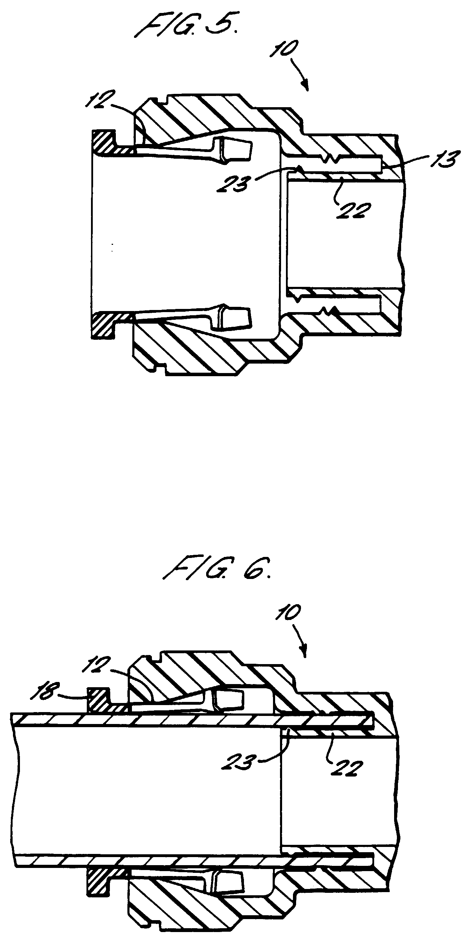

Figure 3 shows a further arrangement in which an additional integral V-section sealing ring 21 is provided on the shoulder 30 to minimize the space between the tube and coupling body which can be penetrated by fluid flowing through the coupling and remain trapped.

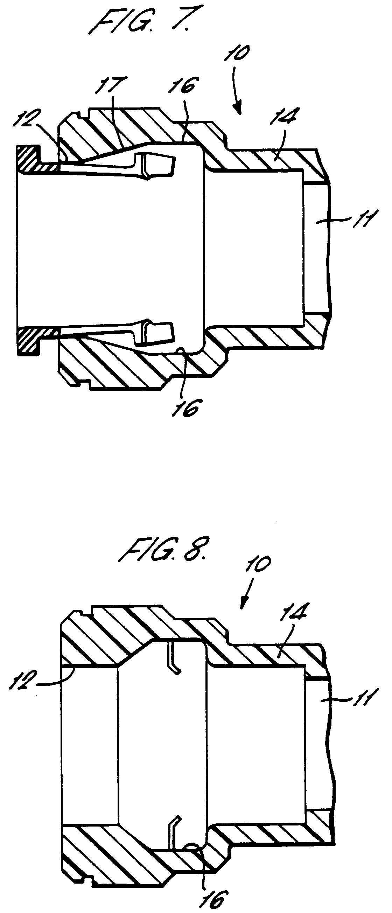

Figure 4 shows the coupling of Figure 3 with the pipe in situ engaging the sealing ring 21 on the step or shoulder 13.

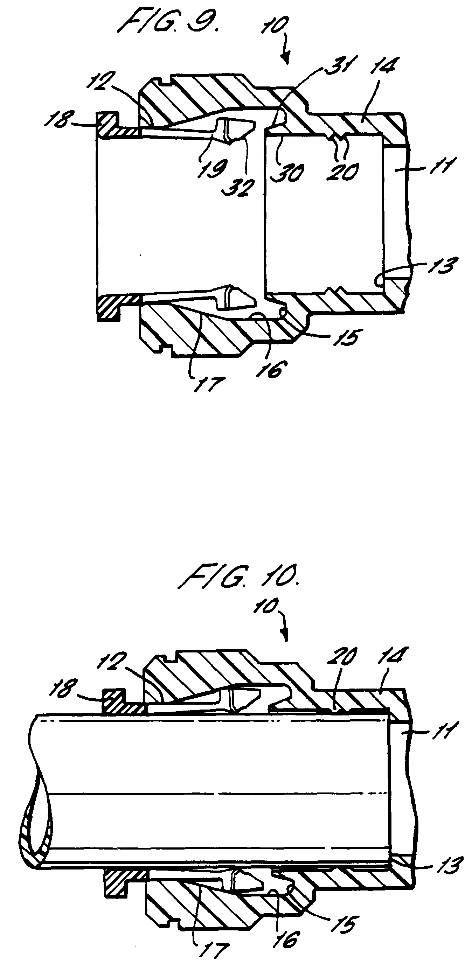

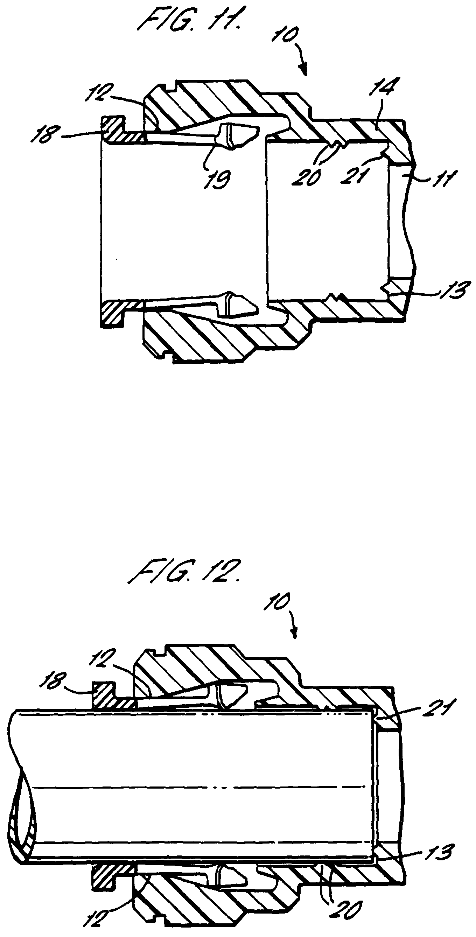

Figure 5 of the drawings shows a further arrangement in which an integral sleeve 22 is formed around the inner periphery of the step 13 and projects forwardly towards the open end 12 of the coupling body. The sleeve 22 fits within the tube to be received in the coupling body and is formed with an external annular sealing ring 23 adjacent the free end thereof to seal in the tube as shown in Figure 6.

The coupling body illustrated in any of the arrangements referred to above can be in the form of a "T" to provide a coupling for connecting three pipes together, an elbow for connecting two pipes together extending at right angles to one another, or a closed coupling body for capping off the end of a tube.

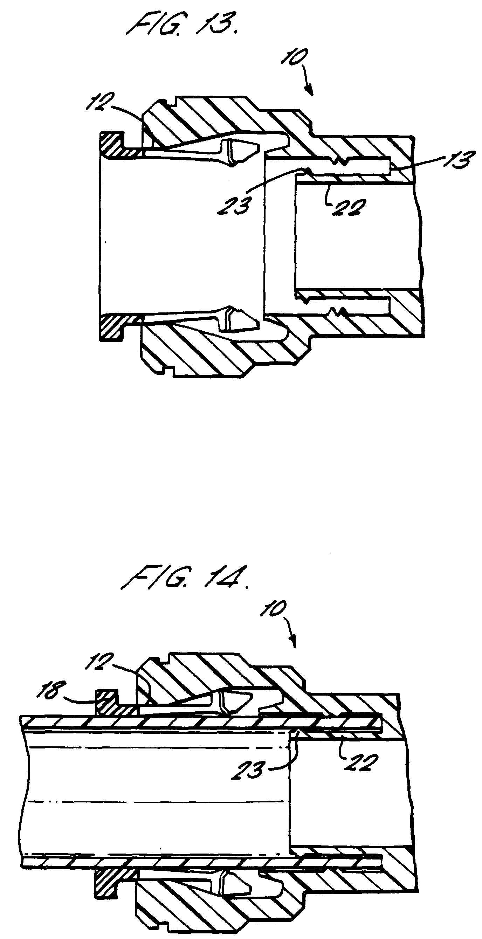

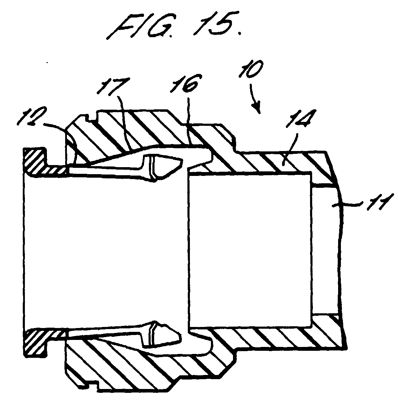

Reference is now made to Figures 7 and 8 of the drawings which show further forms of coupling bodies generally similar to those described above and moulded in elastomeric material. As indicated earlier, the coupling body is formed with an enlarged diameter portion 16 connected by a tapered cam surface 17 which leads to the open end 12 of the coupling body and within which a device for locking a tube in the coupling body is located which may be in the form of a collet as illustrated in Figure 7 or a grab ring arrangement as illustrated in Figure 8. Normally the coupling body is formed as two parts, that is a main body portion containing the enlarged internal cavity portion 16 and an end cap containing the tapered cam surface and open end 12 and the two parts are subsequently joined by ultrasonic welding. This method is know from US-A-4 722 560, for example. This is expensive and complicated in that two sets of tooling are required with the addition of the joining operation and can be avoided if an elastomeric material is used for forming the coupling body which can stretch and thereby deform as the tooling forming the internal part of the coupling body is extracted through the open end 12 of the coupling body and which then returns to its moulded condition as shown in Figures 7 and 8. Thus the coupling body is formed, in effect, with an integral end cap and the elasticity of the material used for the coupling body allows the tooling used to form the throughway to be withdrawn after moulding of the body through the end cap which returns to its moulded form after the tooling has been extracted.

Figures 9 to 15 show the coupling bodies of Figs. 1 to 7 with the addition of an integral internal collet release ring 30 projecting from the portion 14 of the throughway into the enlarged portion 16 of the throughway occuplied by the collet. The ring 30 has a frusto-conical outer face 31 to provide a ramp which is engageable with inner tapers 32 on the ends of the collet fingers to displace the fingers radially outwardly when the collet is pressed into engagement with the ring. The collet fingers are thereby released from a tube extending through the collet allowing the collet to be extracted from the coupling body.

## Claims

1. A method in which a tube coupling body is made, said body having a throughway open at one end (12) to receive a tube, the throughway having a first cylindrical portion (14) of equivalent internal diameter to the external diameter of the tube to be received with a close fit, followed towards the open end (12) by an enlarged diameter cylindrical portion (16) to provide a cavity to receive a device for locking in the body the tube to be received, from which enlarged diameter portion a tapered portion (17) leads to the open end (12) of the body, the body having a cylindrical outer surface around the tapered portion (17) so that the wall thickness of the body increases to said open end (12), the method comprising:
injection moulding the coupling body in one piece in an elastomeric material, using tooling forming the throughway of the coupling body;
releasing the body from the tooling by drawing the tooling through the tapered portion of the throughway out of said open end (12) of the coupling body by stretching the wall of the coupling body as the tooling is withdrawn;
and after extraction of the tooling allowing the coupling body to return to its moulded shape through the elasticity of the material from which is formed the coupling body and to cool to its normal operating temperature.

## Patentansprüche

1. Verfahren, bei dem ein Schlauchkupplungsgehäuse hergestellt wird, wobei das Gehäuse einen an einem Ende (12) offenen Durchlaß zur Aufnahme eines Schlauches aufweist und der Durchlaß einen ersten zylindrischen Abschnitt (14) mit einem Innendurchmesser äquivalent zum Außendurchmesser des mit enger Passung aufzunehmendem Schlauches aufweist, an den sich zum offenen Ende (12) hin ein zylindrischer Abschnitt (16) mit größerem Durchmesser anschließt, der einen Hohlraum zur Aufnahme einer Einrichtung zum Blockieren des aufzunehmenden Schlauches im Gehäuse bildet, wobei von dem Abschnitt mit größerem Durchmesser ein konischer Abschnitt (17) zum offenen Ende (12) des Gehäuses führt, und wobei das Gehäuse eine zylindrische Außenfläche um den konischen Abschnitt (17) herum aufweist, so daß die Wanddicke des Gehäuses zum offenen Ende hin (12) zunimmmt, wobei das Verfahren umfaßt:
das Spritzgießen des Kupplungsgehäuses in einem Stück aus einem elastomeren Material, mit einem Formwerkzeug, das den Durchlaß des Kupplungsgehäuses formt;
Freisetzen des Gehäuses von dem Formwerkzeug durch Ziehen des Formwerkzeugs durch den konischen Abschnitt des Durchlasses aus dem offenen Ende (12) des Kupplungsgehäuses heraus unter Dehnung der Wand des Kupplungsgehäuses beim Herausziehen des Formwerkzeugs;
und nach Herausziehen des Formwerkzeuges Rückfedernlassen des Kupplungsgehäuses in seine spritzgegossene Form aufgrund der Elastizität des Materials, aus dem das Kupplungsgehäuse geformt ist, und Abkühlenlassen auf die normale Betriebstemperatur.

## Revendications

1. Procédé dans lequel on fabrique un corps d'accouplement de tuyaux, ledit corps ayant une voie de passage ouverte au niveau d'une extrémité particulière (12) pour recevoir un tuyau, la voie de passage ayant une première partie cylindrique (14) de diamètre interne équivalent au diamètre externe du tuyau à recevoir avec un ajustement serré, suivie vers l'extrémité ouverte (12) par une partie cylindrique de diamètre agrandi (16) pour réaliser une cavité pour recevoir un dispositif pour verrouiller le tuyau à recevoir dans le corps, partie de diamètre agrandie à partir de laquelle une partie allant en s'amincissant (17) conduit à l'extrémité ouverte (12) du corps, le corps ayant une surface extérieure cylindrique autour de la partie allant en s'amincissant (17) de sorte que l'épaisseur de paroi du corps augmente vers ladite extrémité ouverte (12), le procédé comprenant :
le moulage par injection du corps d'accouplement en une seule pièce dans une matière élastomère, en utilisant un outillage formant la voie de passage du corps d'accouplement ;
la libération du corps de l'outillage en tirant l'outillage à travers la partie allant en s'amincissant de la voie de passage en dehors de ladite extrémité ouverte (12) du corps d'accouplement en étirant la paroi du corps d'accouplement lorsque l'outillage est retiré ;
et ensuite, l'extraction de l'outillage permettant au corps d'accouplement de revenir à sa forme moulée par l'élasticité de la matière à partir de laquelle est formé le corps d'accouplement et de refroidir à sa température normale de fonctionnement.
